# EUROPÄISCHE PATENTSCHRIFT

(11) **EP 4 003 790 B1**
(45) Veröffentlichungstag und Bekanntmachung des Hinweises auf die Patenterteilung: **04.12.2024**
(21) Anmeldenummer: 20747404.0
(22) Anmeldetag: 28.07.2020
(51) Int. Cl.: B60R 13/02, B60J 5/04

(54) **VERKLEIDUNGSANORDNUNG ZUR INNENRAUMAUSSTATTUNG EINES KRAFTFAHRZEUGS, EINE KRAFTFAHRZEUGTÜR SOWIE KRAFTFAHRZEUG**
LINING ASSEMBLY FOR FITTING OUT THE INTERIOR OF A MOTOR VEHICLE, A MOTOR VEHICLE DOOR AND MOTOR VEHICLE
REVÊTEMENT DESTINÉ À L'AMÉNAGEMENT INTÉRIEUR D'UN VÉHICULE AUTOMOBILE, PORTIÈRE DE VÉHICULE AUTOMOBILE ET VÉHICULE AUTOMOBILE

(30) Priorität: 30.07.2019 DE 102019211376
(43) Veröffentlichungstag der Anmeldung: 01.06.2022
(73) Patentinhaber: VOLKSWAGEN AKTIENGESELLSCHAFT, 38440 Wolfsburg (DE)
(72) Erfinder: BETTZÜGE, Thomas, 39164 Wanzleben (DE); JACHMANN, Christian, 38154 Königslutter (DE)
(86) Internationale Anmeldenummer: PCT/EP2020/071237
(87) Internationale Veröffentlichungsnummer: WO 2021/018877

(56) Entgegenhaltungen:
- DE-A1- 10 048 774
- DE-A1- 102014 000 734

## Beschreibung

Die Erfindung betrifft eine Verkleidungsanordnung zur Innenausstattung eines Kraftfahrzeugs, insbesondere einer Kraftfahrzeugtür. Ferner betrifft die Erfindung eine Kraftfahrzeugtür, welche die erfindungsgemäße Verkleidungsanordnung umfasst, sowie ein mit der Kraftfahrzeugtür und/oder der Verkleidungsanordnung ausgestattetes Kraftfahrzeug.

Im Crashfall, mit anderen Worten, wenn ein Fahrzeug mit einem Hindernis zusammenstößt, kommt es aufgrund der auf das Fahrzeug einwirkenden Kräfte zu einer Deformation der Fahrzeugkarosserie bzw. der Fahrzeugwandung. Bereiche der Fahrzeugkarosserie werden in Richtung Fahrzeuginnenraum verschoben und können so eine Verletzungsgefahr für die Fahrzeuginsassen bilden. Insbesondere ist es möglich, dass im Crashfall die verschiedenen Komponenten, die gemeinsam die Fahrzeugwandung ausbilden, gegeneinander verschoben werden, so dass die relative räumliche Anordnung der Komponenten zueinander verändert wird. Dabei können scharfkantige Bauteile freigelegt werden. Dies ist besonders im Bereich von Fahrzeugtüren bedeutsam, da diese typischerweise vielfältige Funktionen miteinander verbinden und dementsprechend eine Vielzahl von Komponenten aufweisen.

Zur Minimierung des Verletzungsrisikos für Fahrzeuginsassen im Crashfall ist es erstrebenswert die Ausstattungskomponenten einer Fahrzeugwandung, beispielsweise einer Fahrzeugtür, so miteinander zu verbinden, dass die relative Position der Ausstattungskomponenten zueinander im Crashfall zumindest im Wesentlichen unverändert bleibt, so dass im Fahrzeuginnenraum keine zusätzlichen Verletzungsrisiken entstehen. Um dies zu gewährleisten, sind gesetzliche Normen zu erfüllen und standardisierte Test zu bestehen, wie beispielsweise seitliche Barriere- und/oder Pfahlcrashtest.

Typischerweise wird die Relativposition von Komponenten komplexer Baugruppen im Lastfall dadurch sichergestellt, dass die Baugruppen miteinander verschachtelt, das heißt in komplexer Weise abschnittsweise vor- und hintereinander, angeordnet werden oder eine Vielzahl von mechanischen Verbindungen, wie beispielswiese Schrauben oder Niete, zur mechanischen Verbindung angebracht werden. Beides führt in der Regel zu einem aufwendigen und teuren Montageprozess. Ebenso teuer und aufwendig ist die Integration von auf den Lastfall abgestimmten Tiefziehteilen aus Metall in die bauraumbegrenzte Gesamtkonstruktion.

Die DE 10 2011 102 302 A1 zeigt eine Befestigungsanordnung für ein Innenverkleidungsteil, hier beispielhaft in Form einer Armauflage, bei der das Innenverkleidungsteil mittels einer Vielzahl von Halteelementen in einer Normalstellung an einem Verkleidungsträger gehalten ist, wobei wenigstens eines der Halteelemente bei einer Krafteinwirkung das Innenverkleidungsteil in einer Fangstellung zum Träger des Innenverkleidungsteils hält. Die offenbarte Lösung zeigt eine Verbindung eines Innenverkleidungsteils mit einem Innenverkleidungsträger, bei der eines der Halteelemente zwar zerstört jedoch nicht abgelöst wird, so dass sich das Innenverkleidungsteil nicht vollständig von seinem Träger lösen kann. Die AT 513707 A1 zeigt ein Schalenelement einer Armauflage, welches ein zugehöriges Trägerelement überdeckt. Die Verbindung zwischen Schalen- und Trägerelement ist grundsätzlich lösbar aber crashsicher mit einer Vielzahl von Verbindungen gestaltet.

Die DE10048774 A1 zeigt eine Verkleidungsanordnung zur Innenraumausstattung eines Kraftfahrzeugs, insbesondere zur Innenraumausstattung einer Kraftfahrzeugtür, umfassend ein mechanisch mit einer Befestigungsstruktur verbindbares Bedienelement, wenigstens ein zumindest abschnittsweise auf einer Außenseite des Bedienelements angeordnetes Verkleidungselement , sowie wenigstens ein Kraftübertragungselement, welches an einer dem Bedienelement abgewandten Seite des Verkleidungselements angeordnet ist und wenigstens ein erstes Anlageelement zur Anlage an der Befestigungsstruktur ausbildet.

Der vorliegenden Erfindung liegt die Aufgabe zugrunde, eine Verkleidungsanordnung für ein Kraftfahrzeug, insbesondere für eine Kraftfahrzeugtür, sowie die Kraftfahrzeugtür selbst und ein diese Kraftfahrzeugtür umfassendes Kraftfahrzeug zur Verfügung zu stellen, welche auf einfach und kostengünstige Weise die Verletzungsgefahr von Insassen, insbesondere bei einer seitlichen Unfallsituation, weiter mindern.

Die Aufgabe wird erfindungsgemäß gelöst durch eine Verkleidungsanordnung gemäß Anspruch 1 sowie durch eine Kraftfahrzeugtür gemäß Anspruch 9. Vorteilhafte Ausgestaltungsformen der erfindungsgemäßen Verkleidungsanordnung werden in den Unteransprüchen 2-8 aufgezeigt. Ergänzend wird ein Kraftfahrzeug gemäß Anspruch 10 zur Verfügung gestellt.

Ein erster Aspekt der Erfindung ist eine Verkleidungsanordnung zur Innenraumausstattung eines Kraftfahrzeugs, insbesondere zur Innenraumausstattung einer Kraftfahrzeugtür, welche ein mechanisch mit einer Befestigungsstruktur verbindbares Bedienelement, wenigstens ein zumindest abschnittsweise auf einer Außenseite des Bedienelements angeordnetes Verkleidungselement, sowie wenigstens ein Kraftübertragungselement, welches an einer dem Bedienelement abgewandten Seite des Verkleidungselements angeordnet ist, umfasst. Das Kraftübertragungselement bildet wenigstens ein erstes Anlageelement zur Anlage an der Befestigungsstruktur und wenigstens ein zweites Anlageelement zur Anlage an dem Verkleidungselement aus. Dadurch bleibt bei Einwirken einer Kraft auf die Verkleidungsanordnung mit wenigstens einer Komponente senkrecht zur dem Bedienelement abgewandten Seite des Verkleidungselements und einer durch das Einwirken der Kraft bedingten Verschiebung des Bedienelements die relative Position des Verkleidungselements zum Bedienelement zumindest im Wesentlichen unverändert.

Die erfindungsgemäße Verkleidungsanordnung ist insbesondere zur Anordnung an einer Befestigungsstruktur einer Kraftfahrzeugtür geeignet. Es ist jedoch nicht ausgeschlossen, dass auch andere Bereiche eines Kraftfahrzeugs mit der erfindungsgemäßen Verkleidungsanordnung ausstattbar sind.

Eine Befestigungsstruktur ist im Sinne der Erfindung ein Bauteil eines Kraftfahrzeugs, welches dazu eingerichtet ist, dass Innenausstattungselemente mechanisch mit diesem verbindbar sind. Die Befestigungsstruktur kann auch als Stützstruktur bezeichnet werden. Es kann sich bei der Befestigungsstruktur um ein mit einem Türrohbau bzw. einem anderen Karosseriebauteil verbundenes oder verbindbares Strukturbauteil, wie beispielhaft eine Fensterhebereinheit, auch Kompaktfensterheber genannt, handeln. Es soll dabei jedoch nicht ausgeschlossen sein, dass der Türrohbau selbst die Befestigungsstruktur ausbildet.

Vorteilhafterweise umfasst die Befestigungsstruktur einen Verbindungsbereich, welcher zur mechanischen Verbindung mit dem Bedienteil der Verkleidungsanordnung ausgebildet ist, indem dieser beispielsweise eine erhöhte Festigkeit aufweist und/oder Befestigungselemente zur Realisierung der mechanischen Verbindung ausbildet.

Unter einem Bedienelement ist im Sinne der Erfindung ein Bauteil zu verstehen, welches durch den Fahrzeugnutzer eine Bedienung erfährt. Im Falle einer Fahrzeugtür handelt es sich dabei typischerweise um einen Zuziehgriff zum Schließen der Fahrzeugtür. Alternativ oder zusätzlich kann ein Bedienelement jedoch auch die Bedienung mechanischer und/oder elektrischer Fahrzeugkomponenten ermöglichen und in diesem Sinne ähnlich wie eine Medieninsel ausgestatte sein.

Zum Zweck der Realisierung der mechanischen Verbindung zwischen dem Bedienelement und der Befestigungsstruktur umfasst das Bedienelement einen Grundkörper, an dem fahrzeuginnenraumseitig eine Bedienelementverkleidung angeordnet oder anordbar ist.

Im Crashfall wirkt typischerweise eine Kraft mit wenigstens einer Richtungskomponente von bei bestimmungsgemäßer Anordnung außerhalb des Fahrzeugs quer zur Haupterstreckungsebene der mit dem Verkleidungssystem ausgestatteten Fahrzeugtür auf die bestimmungsgemäß angeordnete und befestigte Verkleidungsanordnung, indem sie zunächst eine Verschiebung der Befestigungsstruktur in Richtung Fahrzeuginnenraum bewirkt. Durch die mechanische Verbindung der Befestigungsstruktur mit dem Bedienelement wird auch das Bedienelement in Richtung Fahrzeuginnenraum verlagert. Mit anderen Worten wird die Kraft und folglich die Bewegung von der Befestigungsstruktur mittels der mechanischen Verbindung an das Bedienelement übertragen.

Das Bedienteil umfasst eine in Richtung Fahrzeuginnenraum weisende Innenseite und eine in die entgegengesetzte Richtung weisende Außenseite. An die Außenseite des Bedienelements schließt sich ein Verkleidungselement an. Das Verkleidungselement kann dabei Teil einer komplexeren Verkleidungseinheit, bestehend aus mehreren Verkleidungselementen, sein.

Im Falle der Ausstattung einer Fahrzeugtür mit der erfindungsgemäßen Verkleidungsanordnung ist das Verkleidungselement beispielsweise ein Armauflageelement, welches in die restliche Türinnenverkleidung integriert ist. Das Verkleidungselement verfügt über einen typischerweise mehrschichtigen Aufbau, wobei eine in der Regel optisch und haptisch ansprechend gestaltetet Oberseite bei bestimmungsgemäßer Anordnung in Richtung Fahrzeuginnenraum bzw. zum Bedienelement weist, während die Unterseite des Verkleidungselements in die entgegengesetzte Richtung weist bzw. der verbindbaren Befestigungsstruktur zugewandt ist.

Bei bestimmungsgemäßer Anordnung der erfindungsgemäßen Verkleidungsanordnung in einem Fahrzeug bzw. in einer Fahrzeugtür ist wenigsten ein Verkleidungselement zwischen Befestigungsstruktur und Bedienelement angeordnet, wobei es möglich ist, dass zwischen Befestigungsstruktur und Bedienelement wenigstens im Bereich der mechanischen Verbindung zwischen ebendiesen ein Zwischenraum ausgebildet ist, in dem das Verkleidungselement wenigstens teilweise angeordnet ist.

Typischer- aber nicht notwendigerweise ist das Verkleidungselement an dem Bedienelement anliegend angeordnet zwecks Realisierung eines optisch und/oder haptisch ansprechenden Übergangs zwischen Verkleidungselement und Bedienelement auf der Fahrzeuginnenraumseite.

An der Unterseite des Verkleidungselements und somit an seiner dem Bedienelement abgewandten Seite ist ein Kraftübertragungselement angeordnet. Das Kraftübertragungselement bildet auf seiner dem Verkleidungselement abgewandten Seite wenigstens ein erstes Anlageelement aus, welches dazu eingerichtet ist, an der Befestigungsstruktur anzuliegen bzw. sich an diesem abzustützen. Auf der gegenüberliegenden Seite, also der der Unterseite des Verkleidungselements zugewandten Seite, bildet das Kraftübertragungselement wenigstens ein zweites Anlageelement aus. Dieses zweite Anlageelement ist zur Anlage bzw. zur Abstützung am Verkleidungselement ausgebildet. In einer Ausführungsform sind die Anlageelemente als Anlageflächen ausgestalte, welche bei Anlage an das jeweilige, ihnen gegenüberliegend angeordnete Element im Wesentlichen vollständig flächigen Kontakt zu diesem ausbilden.

Zu diesem Zweck ist es vorteilhaft, dass die Anlageflächen und die jeweiligen, gegenüberliegenden Anlagebereiche von Befestigungsstruktur und Verkleidungselement ihrer Form nach komplementär ausgestaltet sind.

Das Kraftübertragungselement ist dazu eingerichtet, wenigstens bei Einwirken einer Kraft auf die Verkleidungsanordnung mit wenigstens einer Komponente senkrecht zur Unterseite des Verkleidungselements eine kraftschlüssige Verbindung zwischen der Befestigungsstruktur und dem Verkleidungselement zu realisieren, so dass die relative Position von Verkleidungselement und Bedienelement zueinander im Wesentlichen unverändert bleibt. Dabei soll nicht ausgeschlossen sein, dass sich Verkleidungs- und Bedienelement geringfügig gegeneinander verschieben. Mit anderen Worten ist das Verkleidungselement mit besagter Kraft im Wesentlichen beaufschlagbar, da dieses unmittelbar oder mittelbar an der Befestigungsstruktur anliegt.

Die Länge des Kraftübertragungselements senkrecht zur Position der Unterseite des Verkleidungselements an der dieses anliegt entspricht wenigstens 95%, vorteilhafterweise wenigstens 98%, des Abstands zwischen der Befestigungsstruktur und dem Verkleidungselement im Bereich der Anordnung des Kraftübertragungselements bei bestimmungsgemäßer Anordnung der Verkleidungsanordnung in einem Kraftfahrzeug bzw. in einer Kraftfahrzeugtür, so dass eine kraftschlüssige Verbindung zwischen der Befestigungsstruktur und dem Verkleidungselement wenigstens dann realisiert ist, wenn die Befestigungsstruktur durch das Einwirken einer Kraft auf die Verkleidungsanordnung um mehr als 5%, vorteilhafterweise mehr als 2%, des Abstands zwischen der Befestigungsstruktur und dem Verkleidungselement in Richtung des Verkleidungselements verlagert wird. In dieser Ausführungsform wird der mechanische Kontakt bzw. die kraftschlüssige Verbindung zwischen der Befestigungsstruktur und dem Verkleidungselement erst ausgebildet, wenn eine Kraft einwirkt.

In einer alternativen Ausführungsform entspricht die Länge des Kraftübertragungselements im Wesentlichen dem Abstand zwischen der Befestigungsstruktur und dem Verkleidungselement bei bestimmungsgemäßer Anordnung der Verkleidungsanordnung in einem Kraftfahrzeug bzw. in einer Kraftfahrzeugtür, so dass bei bestimmungsgemäßer Anordnung der Verkleidungsanordnung in einem Kraftfahrzeug bzw. in einer Kraftfahrzeugtür eine kraftschlüssige Verbindung zwischen der Befestigungsstruktur und dem Verkleidungselement realisiert ist. In dieser Ausführungsform ist der mechanische Kontakt zwischen der Befestigungsstruktur und dem Verkleidungselement auch ohne das Einwirken einer Kraft auf die Verkleidungsanordnung ausgebildet.

Das Kraftübertragungselement bewirkt, dass eine durch eine Krafteinwirkung auf die Befestigungsstruktur, insbesondere bei bestimmungsgemäßer Anordnung von außerhalb des Fahrzeugs in Richtung Fahrzeuginnenraum, und wenigsten teilweise senkrecht zur Erstreckungsebene der mit der Verkleidungsanordnung ausgestatteten Fahrzeugtür, gleichzeitig mit der Verlagerung des Bedienelements in Folge der Kraftübertragung mittels der mechanischen Verbindung zwischen Bedienelement und Befestigungsstruktur, eine Verlagerung des Verkleidungselements um den im Wesentlichen gleichen Weg bewirkt wird, so dass die relative Position zwischen dem Verkleidungselement und dem Bedienelement zumindest im Wesentlichen unverändert bleibt und im Fahrgastinnenraum keine oder nur sehr kleine Spalten oder Lücken entstehen. Mit anderen Worten wird das Entstehen eines scharfkantigen Versatzes zwischen Verkleidungselement und Bedienelement im Crashfall vermieden. Dies ist besonders in Unfallsituationen bedeutsam, bei denen eine Kraft seitlich von außerhalb des Fahrzeugs mit wenigstens einer Kraftkomponente senkrecht zum Verkleidungselement wirksam wird.

Der Vorteil der erfindungsgemäßen Verkleidungseinrichtung besteht darin, dass die relative Position von Verkleidungs- und Bedienelement zueinander im Crashfall zumindest im Wesentlichen sichergestellt ist, wodurch das Verletzungsrisiko für die Fahrzeuginsassen verringerbar ist.

In einer Ausgestaltungsform der Verkleidungsanordnung ist das Kraftübertragungselement in unmittelbarer Nähe zur Position der zwischen Bedienelement und Befestigungsstruktur ausbildbaren mechanischen Verbindung angeordnet, so dass eine Position der Anlage des Kraftübertragungselements an der Befestigungsstruktur ausbildbar ist, die zu einer Position der mechanischen Verbindung zwischen Bedienelement und Befestigungsstruktur einen Abstand aufweist, der weniger als die Hälfte der maximalen Erstreckung des Kraftübertragungselements in einer parallel zur von dem Verkleidungselement ausgebildeten Ebenen beträgt.

Dabei ist unter der Position der mechanischen Verbindung zwischen Bedienelement und Befestigungsstruktur und der Position der Anlage des Kraftübertragungselements an der Befestigungsstruktur, jeweils die in die Ebene des Verkleidungselements projizierte Position zu verstehen.

Mittels der mechanischen Verbindung wird eine von außerhalb des Fahrzeugs auf die Befestigungsstruktur wirkende Kraft auf das Bedienelement übertragen bei bestimmungsgemäßer Anordnung der Verkleidungsanordnung in einem Fahrzeug oder einer Fahrzeugtür. Die Kraftübertragung erfolgt an einer Kraftübertragungsfläche, welche die Fläche ist, an der sich Befestigungsstruktur und Bedienelement berühren.

Vorteilhafterweise ist das Kraftübertragungselement relativ zur ausgebildeten bzw. ausbildbaren mechanischen Verbindung so angeordnet, dass die jeweilige Position der Kraftaufnahme der mechanischen Verbindung und des Kraftübertragungselements einen geringen Abstand zueinander aufweisen.

In einer besonders vorteilhaften Ausführungsform ist die Position der Anlage des Kraftübertragungselements unmittelbar benachbart zur Position der mechanischen Verbindung zwischen dem Bedienelement und der Befestigungsstruktur bzw. an diese direkt angrenzend.

Der Vorteil dieser Ausführungsform besteht darin, dass bei einem seitlichen Stoß auf eine mit der erfindungsgemäßen Verkleidungsanordnung ausgestattete Fahrzeugtür an der Position der mechanischen Verbindung von Bedienelement und Befestigungsstruktur im Wesentlichen eine gleich große Kraft wirkt wie an der Position der Anlage des Kraftübertragungselements an der Befestigungsstruktur, wodurch eine im Wesentlichen gleich große Kraft auf das Bedienelement und das Verkleidungselement übertragbar ist, so dass diese zumindest im Wesentlichen um den gleichen Weg verlagerbar sind.

In einer weiteren Ausführungsform gilt in umgekehrter Weise alternativ oder zusätzlich, dass die Position der Anlage des Kraftübertragungselements am Verkleidungselement zur Position der mechanischen Verbindung zwischen Bedienelement und Befestigungsstruktur einen Abstand aufweist, der weniger als die Hälfte der maximalen Erstreckung des Kraftübertragungselements in einer parallel zur von dem Verkleidungselement ausgebildeten Ebenen beträgt.

Mit anderen Worten sind vorteilhafterweise die Kraftübertragungswege der Kraftübertragung mittels der mechanischen Verbindung und mittels des Kraftübertragungselements zumindest im Wesentlichen parallel zueinander ausgebildet.

In einer Ausgestaltungsform der Verkleidungsanordnung bildet das Bedienelement zwecks Ausbildung der mechanischen Verbindung mit der Befestigungsstruktur einen wenigstens teilweise das Verkleidungselement durchdringenden Vorsprung aus.

Ein derartiger Vorsprung kann als Dom oder Dorn ausgestaltet sein. Das Verkleidungselement, welches zu diesem Zweck vorteilhafterweise mit einer Aussparung versehen ist, wird von dem Vorsprung durchdrungen. Die Aussparung ist dabei vorteilhafteraber nicht notwendigerweise der Form nach komplementär zur Form des Vorsprungs gestaltet.

Der Vorsprung ist dazu eingerichtet, wenigstens in seinem Endbereich einen mechanischen Kontakt mit der Befestigungsstruktur auszubilden und eine Befestigung zu ermöglichen.

In einer Ausführungsform ist der Vorsprung als Schraubdom ausgestaltet, welcher in seinem Endbereich wenigstens eine zur Anlage an die Befestigungsstruktur gestaltete Anlagefläche ausbildet, auf der der Dom abstützbar ist. Die Anlagefläche entspricht im Wesentlichen der Kraftübertragungsfläche der mechanischen Verbindung. Im Bereich der Anlage des Vorsprungs an der Befestigungsstruktur wird typischerweise unter Zuhilfenahme wenigstens eines Verbindungsmittels, wie einer Schraube oder einem Niet, eine form- und/oder kraftschlüssige Verbindung realisiert. Entsprechend wird die Anlagefläche typischerweise auch als Schraubauflage bezeichnet. Es ist jedoch ebenso grundsätzlich möglich, die mechanische Verbindung zwischen Bedienelement und Befestigungsstruktur alternativ oder zusätzlich durch Kleben oder Schweißen zu realisieren.

In dieser Ausführungsform wird mittels des Vorsprungs die einwirkende Kraft auf das Bedienteil übertragen.

Grundsätzlich kann das Bedienelement mehrere Vorsprünge zur Realisierung der mechanischen Verbindung mit einer Befestigungsstruktur aufweisen. Vorteilhafterweise bildet die erfindungsgemäße Verkleidungsanordnung lediglich einen Vorsprung aus, welcher zur mechanischen Verbindung mit einer Befestigungsstruktur eingerichtet ist. Dadurch ist eine Verringerung der Montagezeit erreichbar.

In einer alternativen Ausgestaltung ist es ebenso möglich, dass der das Verkleidungselement durchdringende Vorsprung von der Befestigungsstruktur ausgebildet wird und entsprechend das Bedienelement die Anlagefläche ausbildet.

In einer Ausgestaltungsform der Verkleidungsanordnung ist das Kraftübertragungselement wenigstens teilweise als Hohlprofil ausbildet und umgibt den Vorsprung wenigstens abschnittsweise, so dass eine auf die Verkleidungsanordnung wirkende Kraft parallel zur Längenerstreckung des Vorsprungs vom Kraftübertragungselement übertragbar ist.

Das Kraftübertragungselement ist wenigstens teilweise als Hohlprofil ausgebildet und umgibt den Vorsprung wenigstens in einem Abschnitt, insbesondere in einem Abschnitt des Vorsprungs zwischen der Befestigungsstruktur und dem Verkleidungselement. Dabei ist vorteilhafterweise das Hohlprofil des Kraftübertragungselements im Querschnitt der Form nach komplementär zur Form des Vorsprungs. Beispielhaft ist in einer spezifischen Ausgestaltungsform der Teil des Kraftübertragungselements, welcher einen Abschnitt des Vorsprungs umgibt, als rohrförmige Hülse gestaltet, wenn auch der Vorsprung einen runden Querschnitt aufweist.

Besonders vorteilhafterweise umschließt das Hohlprofil den Vorsprung zwischen dem Verkleidungselement und dem Befestigungselement entlang seiner Längenerstreckung im Wesentlichen vollständig.

Dabei entspricht der Innendurchmesser des Hohlprofils des Kraftübertragungselements vorteilhafterweise zumindest im Wesentlichen dem Außendurchmesser des Vorsprungs, so dass das Kraftübertragungselement an diesem anliegt.

Eine gleichartige Ausführung bei rechteckigem, ovalem, oder andersartig gestaltetem Querschnitt des Vorsprungs ist ebenso möglich.

In einer Ausführungsform sind das erste und das zweite Anlageelemente durch die Stirnflächen des Hohlprofils ausgebildet.

Es ist jedoch nicht ausgeschlossen, dass sich an das Hohlprofil ein erstes und/oder zweites Anlageelement anschließt, welches eine gegenüber der Querschnittsfläche des als Hohlprofil, beispielsweise als Rohrabschnitt, ausgebildeten Abschnitts des Kraftübertragungselements vergrößerte Anlagefläche aufweisen.

Der Vorteil dieser Ausführungsform besteht in einer über den Umfang des Vorsprungs, und damit die Position der mechanischen Verbindung, gleichmäßigen Kraftübertragung auf das Verkleidungselement.

In einer Ausgestaltungsform der Verkleidungsanordnung ist das Kraftübertragungselement am Verkleidungselement form- und/oder kraftschlüssig fixiert.

Mit anderen Worten sind das Kraftübertragungselement, welches in dieser Ausgestaltung ein separates Bauteil ist, und das Verkleidungselement derart gestaltet, dass Sie jeweils einen Bereich zur Realisierung einer gegenseitigen mechanischen Fixierung ausbilden. In beispielhafter Weise bildet das Kraftübertragungselement einen Haken aus, welcher mit einer Aussparung des Verkleidungselements eine formschlüssige Verbindung realisiert. Eine umgekehrte Ausgestaltung, bei dem ein Haken von dem Verkleidungselement und eine Aussparung vom Kraftübertragungselement ausgebildet ist, ist ebenfalls möglich. Alternativ oder zusätzlich ist beispielsweise auch ein Verkleben von Verkleidungselement und Kraftübertragungselement möglich. Dabei ist die Fixierung nicht notwendigerweise dazu eingerichtet, im Crashfall zerstörungsfrei eine Kraft aufzunehmen und zu übertragen.

Der Vorteil dieser Ausgestaltungsform liegt in der Sicherung des Kraftübertragungselements am Verkleidungselement gegen ein Verlieren, insbesondere einem Verlieren während eines Montageprozesses und /oder eines Transportprozesses.

In einer alternativen Ausgestaltungsform ist das Kraftübertragungselement durch das Verkleidungselement ausgebildet bzw. ein integraler Bestandteil des Verkleidungselements.

Das Verkleidungselement kann Bestandteil einer komplexen Verkleidungseinheit sein, welche mehrere Verkleidungselemente umfasst.

In einer solchen Ausgestaltung ist es ferner möglich, dass das Kraftübertragungselement ein integraler Bestandteil eines zweiten Verkleidungselements ist, welches zusammen mit dem ersten Verkleidungselement eine Verkleidungseinheit ausbildet. Im Falle einer Fahrzeugtür kann dies beispielhaft die Rückwand eines Ablagefachs sein.

In einer Ausgestaltungsform der Verkleidungsanordnung weist das Kraftübertragungselement wenigstens ein Versteifungselement, insbesondere eine Versteifungsrippe, zwecks wenigstens bereichsweiser Erhöhung der Steifigkeit des Kraftübertragungselements auf.

Versteifungselemente sind im Sinne der Erfindung Bereiche des Kraftübertragungselements, welche die Steifigkeit und/oder das Flächenträgheitsmoment des Kraftübertragungselements wenigstens abschnittsweise erhöhen. Diese können beispielsweise als Versteifungsrippen ausgeführt sein, welche sich im Wesentlichen entlang der Längenerstreckung auf einer Oberfläche des Kraftübertragungselements erstrecken. Dabei können in einer Ausführungsform bei einer einen Vorsprung umgebenden Anordnung des Kraftübertragungselements, die Versteifungselemente gleichmäßig zueinander beabstandet und/oder über dem Umfang des Kraftübertragungselements gleichmäßig verteilt sein. Es ist jedoch ebenfalls möglich, dass lediglich bestimmte Bereiche des Kraftübertragungselements Versteifungselementen aufweisen, so dass auf diese Art die Kraftübertragung bzw. das Kraftübertragungsverhalten durch das Kraftübertragungselement an spezifische Lastfälle angepasst ist.

Der Vorteil dieser Ausführungsform besteht in einer wenigstens abschnittsweise erhöhten Steifigkeit des Kraftübertragungselements.

In einer Ausgestaltungsform der Verkleidungsanordnung weist das Kraftübertragungselement wenigstens einen festigkeitsreduzierten Bereich, insbesondere eine Sollbruchstelle, auf. Der festigkeitsreduzierte Bereich ist zur wenigstens teilweisen mechanischen Deformation und/oder zum Bruch des Kraftübertragungselements bei Einwirkung einer definierten Mindestkraft auf die Verkleidungsanordnung in einer definierten Richtung, die von einer senkrecht auf das Verkleidungselement verlaufenden Krafteinwirkungsrichtung im Wesentlichen abweicht ausgebildet, zwecks Verhinderung oder Minderung einer Übertragung der auf die Verkleidungsanordnung einwirkenden Kraft auf das Verkleidungselement.

Festigkeitsreduzierte Bereiche sind insbesondere Sollbruchstellen, welche dazu eingerichtet sind, eine mechanische Deformation und/oder Zerstörung des Kraftübertragungselements bei bestimmten definierten Lastfällen zu bewirken, so dass eine Kraftübertragung mittels des Kraftübertragungselements unterbrechbar oder unterbindbar ist.

Dabei ist der festigkeitsreduzierte Bereich so angeordnet und ausgelegt, dass eine Deformation oder ein Bruch des Kraftübertragungselements im Wesentlichen dann folgt, wenn eine definierte Mindestkraft aus einer Richtung auf die Verkleidungsanordnung einwirkt, die im Wesentlichen von einer senkrecht auf die Ebene des Verkleidungselements wirkenden Kraft abweicht. Typischerweise ist dies mittels einer bereichsweisen Materialverjüngung, Materialschwächung und/oder Materialaussparung realisiert. Dies gilt in gleicher Weise für das Wirken eines Drehmoments auf die Verkleidungsanordnung.

Diese Ausführungsform ist insbesondere dann vorteilhaft, wenn das Einwirken einer definierten Mindestkraft in einer bestimmten Richtung auf die Verkleidungsanordnung, und die damit einhergehende Verlagerung der Elemente und Komponenten, zur Freilegung von Bauteilkomponenten oder Erzeugung von Kanten führen würde, die für den Fahrzeuginsassen ein Verletzungsrisiko darstellten würden.

Der Vorteil dieser Ausführungsform besteht darin, dass das Kraftübertragungselement bei definierten Lastfällen in vorhersagbarer Weise deformierbar und/oder zerstörbar ist.

In einer Ausgestaltungsform der Verkleidungsanordnung weist das Kraftübertragungselement wenigstens ein Formschlusselement zwecks Festlegung einer eindeutigen Position des Kraftübertragungselements in Bezug zum Bedienelement auf.

Dabei fixiert das Formschlusselement das Kraftübertragungselement wenigstens hinsichtlich eines translatorischen und/oder rotatorischen Freiheitsgrads.

Ein Formschlusselement meint im Sinne der Erfindung ein Element des Kraftübertragungselements, mit dem einen Formschluss mit dem Bedienelement, oder alternativ mit der Befestigungsstruktur in der Art ausbildbar ist, dass die beiden Verbindungspartner der formschlüssigen Verbindung ineinandergreifen. Insbesondere ist durch ein Formschlusselement eine Drehbewegung des Kraftübertragungselements um seine Längsachse blockierbar. Mittels eines Formschlusselements ist die Position des Kraftübertragungselements in Bezug zur Befestigungsstruktur und/oder dem Bedienelement festlegbar, wodurch einer fehlerhaften Ausrichtung des Kraftübertragungselements bei der Montage entgegenwirkbar ist. Dies ist insbesondere vorteilhaft, wenn die Festigkeit des Kraftübertragungselements bereichsweise unterschiedlich und auf verschiedene Lastfälle angepasst ist.

In einer Ausführungsform ist das Kraftübertragungselement aus Kunststoff, insbesondere Polypropylen, ausgebildet. Abhängig von der jeweiligen Anordnung der erfindungsgemäßen Verkleidungsanordnung ist gegebenenfalls die Verwendung von Spezialkunststoffen, wie beispielsweise einem Acrylnitril-Butadien-Styrol-Kunststoff, vorteilhaft.

Eine Ausbildung des Kraftübertragungselements aus Metall ist ebenfalls nicht ausgeschlossen.

Die Ausführung des Kraftübertragungselements aus Kunstsoff ermöglicht eine kostengünstige Herstellung als Spritzgussteil.

Ein zweiter Aspekt der Erfindung ist eine Kraftfahrzeugtür umfassend einen Türrohbau sowie daran angeordnet oder davon ausgebildet eine Befestigungsstruktur sowie eine erfindungsgemäße Verkleidungsanordnung, wobei das Bedienelement mit der Befestigungsstruktur mechanisch verbunden ist.

Unter dem Türrohbau ist die typischerweise aus Metall ausgebildete Tragstruktur einer Fahrzeugtür zu verstehen.

Dabei ist die Befestigungsstruktur mit dem Türrohbau mechanisch verbunden oder bildet zusammen mit den Türrohbau eine bauliche Einheit aus.

Mit anderen Worten stützt sich das Bedienelement mittelbar oder unmittelbar an der Befestigungsstruktur ab.

Alternativ ist eine Ausführungsform möglich, welche sich dadurch auszeichnet, dass das Kraftübertragungselement eine bauliche Einheit mit der Befestigungsstruktur ausbildet, das heißt von dieser ausgebildet wird oder an dieser fixiert ist.

Ein dritter Aspekt der Erfindung ist ein Kraftfahrzeug, insbesondere ein Personenkraftwagen, umfassend wenigstens eine erfindungsgemäße Verkleidungsanordnung und/oder wenigstens eine erfindungsgemäße Kraftfahrzeugtür.

Die Erfindung wird im Folgenden anhand der in den beiliegenden Zeichnungen dargestellten Ausführungsbeispiele erläutert.

Es zeigen
Fig. 1: eine Ausführungsform eines Kraftübertagungselements der erfindungsgemäßen Verkleidungsanordnung;
Fig. 2: einen Ausschnitt der erfindungsgemäßen Verkleidungsanordnung in einer Schnittansicht senkrecht zur bestimmungsgemäßen Ausrichtung der Verkleidungsanordnung bei Anordnung in einer Fahrzeugtür;
Fig. 3: das Wirkprinzip der erfindungsgemäßen Verkleidungsanordnung;
Fig. 4: eine Ausführungsform der erfindungsgemäßen Verkleidungsanordnung in dreidimensionaler Ansicht;
Fig. 5: eine Ausgestaltung einer Türverkleidung einer Fahrzeugtür als Zusammenbaugruppe in dreidimensionaler Ansicht vom Fahrzeuginnenraum bei bestimmungsgemäßer Anordnung in einem Fahrzeug sowie
Fig. 6: eine Ausgestaltung einer Türverkleidung analog zu Fig. 5 in dreidimensionaler Ansicht vom außerhalb des Fahrzeugs bei bestimmungsgemäßer Anordnung in einem Fahrzeug.

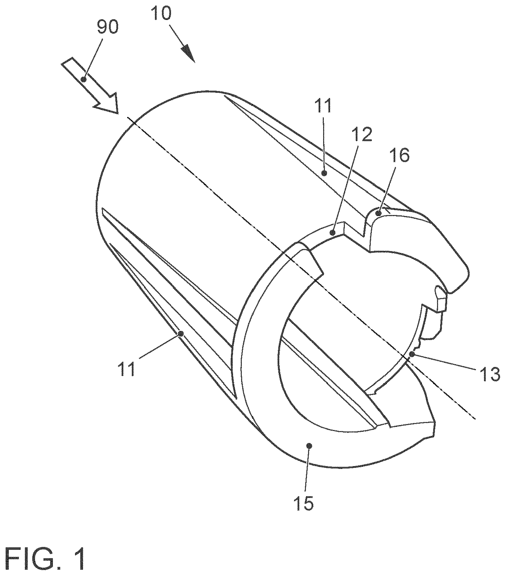

Figur 1 zeigt eine Ausführungsform eines Kraftübertagungselements 10 der erfindungsgemäßen Verkleidungsanordnung. Die dem Betrachter zugewandte Stirnseite des im Wesentlichen hülsenförmigen Kraftübertragungselements 10 ist das zweite Anlageelement 15. Es ist zu erkennen, dass das Kraftübertragungselements 10 parallel zur seiner Längenerstreckung auf seiner Oberseite Versteifungsrippen 11 ausbildet, die auf dem Umfang des Kraftübertragungselements 10 im Wesentlichen gleichmäßig verteilt sind. Die dem Betrachter zugewandte Stirnseite weißt zwei Formelemente 12, 13 in Form von Aussparungen auf, welche hinsichtlich ihrer Form dem Anlagebereich des Verkleidungselements angepasst sind. In der hier gezeigten Ausführungsform bildet das zweite Anlageelement 15 abschnittsweise einen Kragen 16 aus, der als Schraubauflage dienen kann. Auf der dem Betrachter abgewandten Seite, und in dieser Darstellung nicht sichtbar, ist das erste Anlageelement angeordnet, welches bei bestimmungsgemäßer Ausrichtung zur Anlage an der Befestigungsstruktur ausgebildet ist. Der Pfeil zeigt die Richtung einer von außerhalb eines Fahrzeugs im Crashfall auf das Kraftübertragungselement 10 wirkenden Kraft 90 an, sofern dieses bestimmungsgemäß in einem Fahrzeug angeordnet ist.

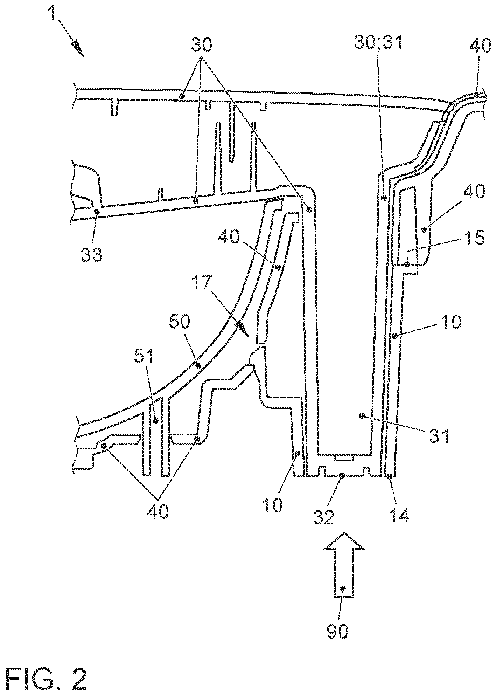

Figur 2 zeigt einen Ausschnitt der erfindungsgemäße Verkleidungsanordnung 1 in einer Schnittansicht senkrecht zu seiner bestimmungsgemäßen Ausrichtung bei Anordnung in einer Fahrzeugtür.

Es ist zu erkennen, dass das Bedienelement 30 einen Vorsprung 31 ausbildet, welcher in der gezeigten Ausführung als Schraubdom ausgeführt ist und eine im Wesentlichen runden inneren Querschnittsfläche sowie eine im Wesentlichen runde äußere Querschnittsfläche aufweist. Der Vorsprung 31 ist in Richtung der hier nicht dargestellten Befestigungsstruktur ausgebildet. Die Anlagefläche 32 des Vorsprungs 31 liegt bei bestimmungsgemäßer Anordnung an der Befestigungsstruktur an.

An der der Befestigungsstruktur zugewandten Außenseite 33 des Bedienelements 30 ist das Verkleidungselement 40 angeordnet. Es ist in der Darstellung zu erkennen, dass in der hier gezeigten Ausführungsform das Verkleidungselement 40 Teil einer Verkleidungseinheit ist und mit einem Türinnenverkleidungselement 50 verbunden ist. Der Verbindungsbereich 51, in dem die Verbindung zwischen Verkleidungselement 40 und Türinnenverkleidungselement 50 realisiert ist, ist hier als Schweißdom ausgeführt. Der Pfeil gibt die Richtung an aus der eine Kraft 90 im Crashfall, insbesondere bei einem Crashtest, auf die Verkleidungsanordnung 1 bei bestimmungsgemäßer Anordnung in einem Fahrzeug einwirkt.

An den seitlichen Flanken des Vorsprungs 31 ist das Kraftübertragungselement 10 angeordnet. Die Fläche, welche das erste Anlageelement 14 ausbildet, ist im Wesentlichen in einer Ebene mit der Anlagefläche 32 angeordnet. Auf der gegenüberliegenden Seite liegt die Fläche, welche das zweite Anlageelement 15 ausbildet, an einem Bereich des Verkleidungselements 40 an. Zwischen den Anlageelementen 14 und 15 findet die Übertragung der Kraft 90 von der Befestigungsstruktur auf das Verkleidungselement 40 statt. Das Kraftübertagungselement 10 umgibt den Vorsprung in der gezeigten Ausführungsform im Wesentlichen vollständig.

Im Zentrum der Darstellung der Figur 2 ist zu erkennen, dass das Kraftübertragungselement 10 mit dem Verkleidungselement 40 eine Rastverbindung 17 ausbildet. Diese Verbindung dient der Transport- und Montagesicherung und wirkt einem Verlieren des Kraftübertragungselements 10 entgegen.

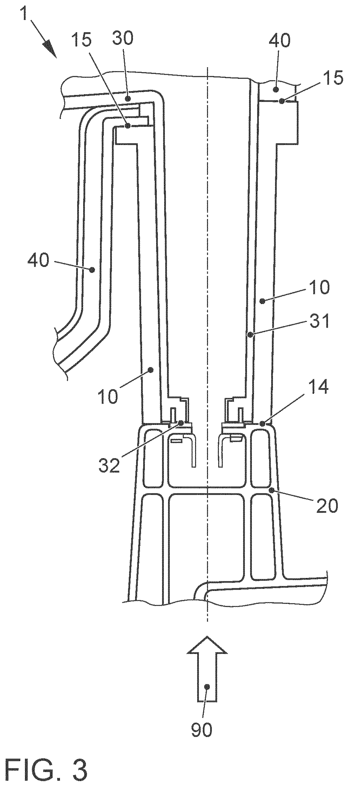

Figur 3 zeigt das Wirkprinzip des erfindungsgemäßen Verkleidungssystems 1. Gezeigt ist die Kraft 90, die von außen auf die Befestigungsstruktur 20 wirkt, so dass diese eine Verlagerung nach abbildungsgemäß oben erfährt. Die Kraft 90 wird an der Anlagefläche 32 des Vorsprungs 31, der von dem Kraftübertragungselement 10 umgeben ist, sowohl an das Bedienelement 30 als auch, über die Anlageelemente 14 und 15, an das Verkleidungselement 40 übertragen. Somit werden Bedienelement 30 und Verkleidungselement 40 im Wesentlichen um denselben Weg verschoben.

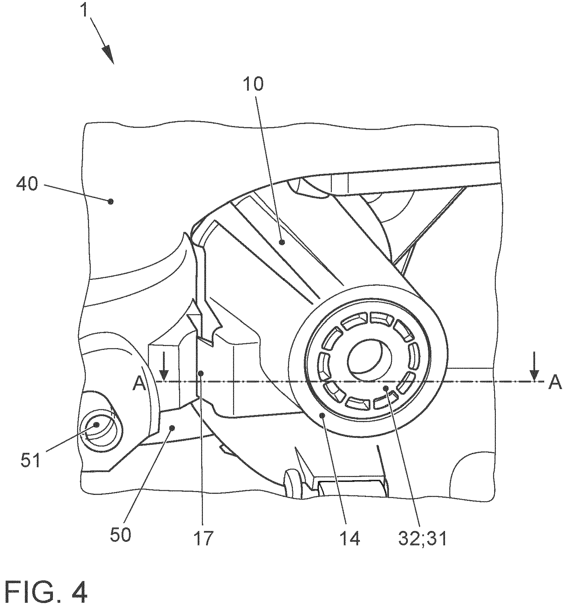

Figur 4 zeigt eine dreidimensionale Ansicht der erfindungsgemäßen Verkleidungsanordnung 1. Es ist zu erkennen, dass das Kraftübertragungselement 10 am Vorsprung 31 des Bedienelements angeordnet ist und an dem Verkleidungselement 40, welches mit dem Türinnenverkleidungselement 50 an den Verbindungsbereichen 51 verbunden ist, mittels einer Rastverbindung 17 fixiert ist. An die Anlagefläche 32 schließt sich bestimmungsgemäß die Befestigungsstruktur an. In der zentralen Öffnung in der Anlagefläche 32 wird bei der Montage zur Ausbildung der mechanischen Verbindung von Bedienelement und Befestigungsstruktur ein Befestigungsmittel, wie beispielsweise eine Schraube, angeordnet. Der hier durch A-A gekennzeichnete Schnitt entspricht der Darstellung in Figur 2.

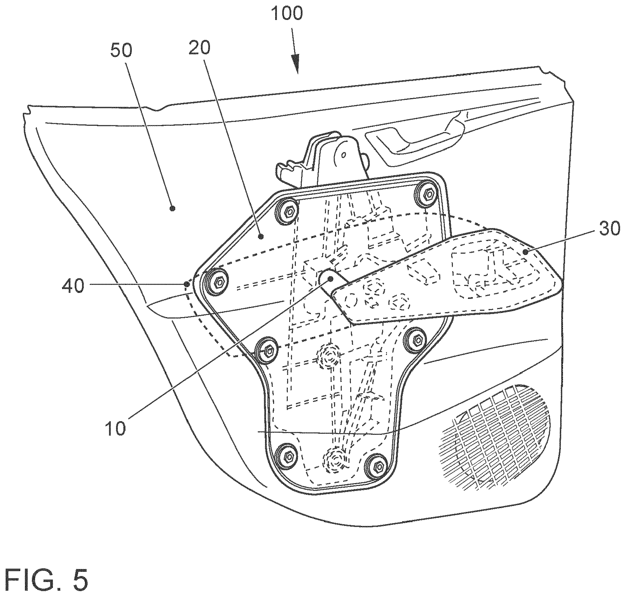

Figur 5 zeigt eine Ausgestaltung einer Türverkleidung 100 einer Fahrzeugtür als Zusammenbaugruppe in dreidimensionaler Ansicht. Nicht gezeigt ist der Fahrzeugtürrohbau in den die dargestellte Türverkleidung integriert ist. Die dem Betrachter zugewandte Seite ist bei bestimmungsgemäßer Anordnung in bzw. an einem Türrohbau dem Fahrzeuginnenraum zugewandt. Die Befestigungsstruktur 20 wird im gezeigten Beispiel in Form einer Fensterhebereinheit bereitgestellt, an dem das Bedienelement 30, welches im Beispiel ein Zuziehgriff einer Fahrzeugtür ist, befestigt ist. Die Fensterhebereinheit ist in der fertig montierten Fahrzeugtür mit dem Türrohbau verbunden. Zwischen Befestigungsstruktur 20 und Bedienelement 30 ist ein Verkleidungselement 40 in Form einer Armauflage angeordnet, welche hier lediglich angedeutet ist. Die Armauflage ist mit dem Türinnenverkleidungselement 50 verbunden. Es ist zu erkennen, dass das Kraftübertragungselement 10 zwischen dem Bedienelement 30 und der Befestigungsstruktur 20 angeordnet ist. Die Ansicht deutet an, dass im Bereich der Befestigung des Bedienelements 30 das Verkleidungselement 40 zwischen dem Kraftübertragungselement 10 und der Befestigungsstruktur 20 angeordnet ist, und vom Vorsprung des Bedienelements 30 durchdrungen wird.

Das Bedienelement, hier der Zuziehgriff, ist im fertiggestellten Fahrzeug mit einer Bedienelementverkleidung versehen. Es ist jedoch ebenfalls möglich, dass an dem Bedienelement mit Einrichtungen zur Steuerung von Funktionen im oder am Fahrzeug angeordnet sind.

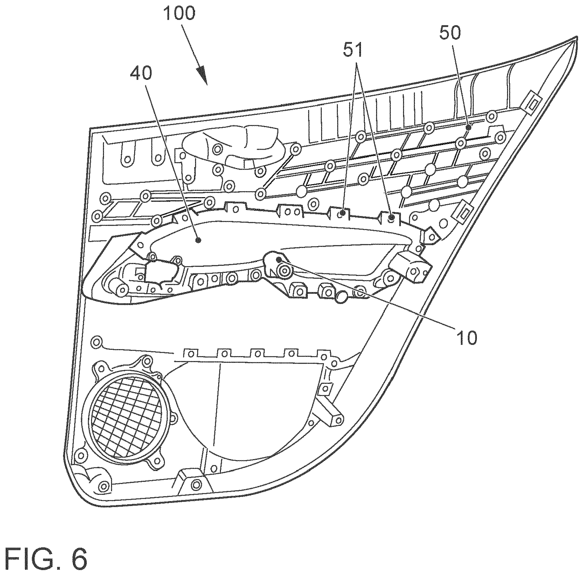

Figur 6 zeigt die Ausgestaltung einer Türverkleidung 100 gemäß Figur 5 in dreidimensionaler Ansicht betrachtet aus der im Vergleich zu Figur 5 entgegengesetzten Richtung. Es ist somit die Rückseite der Türverkleidung zu sehen, welche bei der fertig montierten Fahrzeugtür im Inneren der Tür liegt. Zu sehen ist das Verkleidungselement 40, welches mit dem Türinnenverkleidungselement 50 an den Verbindungsbereichen 51 verbunden ist. Die hier realisierte Verbindung ist typischer- aber nicht notwendigerweise eine Schweißverbindung. In dieser Ausführungsform ist das Verkleidungselement 40 bereichsweise vor und hinter dem Türinnenverkleidungselement 50 verschachtelt angeordnet. Das Verkleidungselement 40 und die Türinnenverkleidung 50 können grundsätzlich auch einstückig, das heißt als eine bauliche Einheit, ausgeführt sein. Ferner ist die Anordnung des Kraftübertragungselements 10 zu erkennen.

Darstellungsbedingt nicht erkennbar ist hier das Bedienelement, dessen Vorsprung durch das Verkleidungselement 40 durchdringt und vom Kraftübertragungselement 10 umgeben ist. Die Anordnung des Kraftübertragungselements 10 in dieser Ausgestaltung ist im Detail Figur 4 entnehmbar.

### Bezugszeichenliste

| | |
|---|---|
| Verkleidungsanordnung | 1 |
| Kraftübertragungselement | 10 |
| Versteifungselement | 11 |
| erstes Formelement | 12 |
| zweites Formelement | 13 |
| erstes Anlageelement | 14 |
| zweites Anlageelement | 15 |
| Kragen | 16 |
| Rastverbindung | 17 |
| Befestigungsstruktur | 20 |
| Bedienelement | 30 |
| Vorsprung | 31 |
| Anlagefläche | 32 |
| Außenseite | 33 |
| Verkleidungselement | 40 |
| Türinnenverkleidungselement | 50 |
| Verbindungsbereich | 51 |
| Kraft | 90 |
| Türverkleidung | 100 |

## Patentansprüche

1. Verkleidungsanordnung (1) zur Innenraumausstattung eines Kraftfahrzeugs, insbesondere zur Innenraumausstattung einer Kraftfahrzeugtür, umfassend ein mechanisch mit einer Befestigungsstruktur (20) verbindbares Bedienelement (30), wenigstens ein zumindest abschnittsweise auf einer Außenseite (33) des Bedienelements (30) angeordnetes Verkleidungselement (40), sowie wenigstens ein Kraftübertragungselement (10), welches an einer dem Bedienelement (30) abgewandten Seite des Verkleidungselements (40) angeordnet ist und wenigstens ein erstes Anlageelement (14) zur Anlage an der Befestigungsstruktur (20) und wenigstens ein zweites Anlageelement (15) zur Anlage an dem Verkleidungselement (40) ausbildet, so dass bei Einwirken einer Kraft (90) auf die Verkleidungsanordnung (1) mit wenigstens einer Komponente senkrecht zur dem Bedienelement (30) abgewandten Seite des Verkleidungselements (40) und einer durch das Einwirken der Kraft (90) bedingten Verschiebung des Bedienelements (30) die relative Position des Verkleidungselements (40) zum Bedienelement (30) zumindest im Wesentlichen unverändert bleibt.

2. Verkleidungsanordnung (1) nach dem vorhergehenden Anspruch, **dadurch gekennzeichnet, dass** das Kraftübertragungselement (10) in unmittelbarer Nähe zur Position der zwischen Bedienelement (30) und Befestigungsstruktur (20) ausbildbaren mechanischen Verbindung angeordnet ist, so dass eine Position der Anlage des Kraftübertragungselements (10) an der Befestigungsstruktur (20) ausbildbar ist, die zu einer Position der mechanischen Verbindung zwischen Bedienelement (30) und Befestigungsstruktur (20) einen Abstand aufweist, der weniger als die Hälfte der maximalen Erstreckung des Kraftübertragungselement (10) in einer parallel zur von dem Verkleidungselement (40) ausgebildeten Ebenen beträgt.

3. Verkleidungsanordnung (1) nach einem der vorhergehenden Ansprüche, **dadurch gekennzeichnet, dass** das Bedienelement (30) zwecks Ausbildung der mechanischen Verbindung mit der Befestigungsstruktur (20) einen wenigstens teilweise das Verkleidungselement (40) durchdringenden Vorsprung (31) ausbildet.

4. Verkleidungsanordnung (1) nach Anspruch 3, **dadurch gekennzeichnet, dass** das Kraftübertragungselement (10) wenigstens teilweise als Hohlprofil ausbildet ist und den Vorsprung (31) wenigstens abschnittsweise umgibt, so dass eine auf die Verkleidungsanordnung (1) wirkende Kraft (90) parallel zur Längenerstreckung des Vorsprungs (31) vom Kraftübertragungselement (10) übertragbar ist.

5. Verkleidungsanordnung (1) nach einem der vorhergehenden Ansprüche, **dadurch gekennzeichnet, dass** das Kraftübertragungselement (10) am Verkleidungselement (40) form- und/oder kraftschlüssig fixiert ist.

6. Verkleidungsanordnung (1) nach einem der vorhergehenden Ansprüche,
**dadurch gekennzeichnet, dass** das Kraftübertragungselement (10) wenigstens ein Versteifungselement (11), insbesondere eine Versteifungsrippe, zwecks wenigstens bereichsweiser Erhöhung der Steifigkeit des Kraftübertragungselements (10) aufweist.

7. Verkleidungsanordnung (1) nach einem der vorhergehenden Ansprüche, **dadurch gekennzeichnet, dass** das Kraftübertragungselement (10) wenigstens einen festigkeitsreduzierten Bereich, insbesondere eine Sollbruchstelle, aufweist, zur wenigstens teilweisen mechanischen Deformation und/ oder Bruch des Kraftübertragungselements (10) bei Einwirkung einer definierten Mindestkraft auf die Verkleidungsanordnung (1) in einer definierten Richtung, die von einer senkrecht auf das Verkleidungselement (40) verlaufenden Krafteinwirkungsrichtung im Wesentlichen abweicht, zwecks Verhinderung oder Minderung einer Übertragung der auf die Verkleidungsanordnung (1) einwirkenden Kraft (90) auf das Verkleidungselement (40).

8. Verkleidungsanordnung (1) nach einem der vorhergehenden Ansprüche, **dadurch gekennzeichnet, dass** das Kraftübertragungselement (10) wenigstens ein Formschlusselement (12, 13) zwecks Festlegung einer eindeutigen Position des Kraftübertragungselements (10) in Bezug zum Bedienelement (30) aufweist.

9. Kraftfahrzeugtür umfassend einen Türrohbau sowie daran angeordnet oder davon ausgebildet eine Befestigungsstruktur (20) sowie eine Verkleidungsanordnung (1) gemäß einem der vorhergehenden Ansprüche, wobei das Bedienelement (30) mit der Befestigungsstruktur (20) mechanisch verbunden ist.

10. Kraftfahrzeug, insbesondere Personenkraftwagen, umfassend wenigstens eine Verkleidungsanordnung (1) gemäß einem der Ansprüche 1 bis 8 und/oder wenigstens eine Kraftfahrzeugtür gemäß Anspruch 9.

## Claims

1. Trim arrangement (1) for the interior fittings of a motor vehicle, in particular for the interior fittings of a motor vehicle door, comprising an operating element (30) that can be mechanically connected to a fastening structure (20), at least one trim element (40) that is arranged at least in portions on an outer side (33) of the operating element (30), and at least one force transmission element (10) that is arranged on a side of the trim element (40) facing away from the operating element (30) and that forms at least a first contact element (14) for contacting the fastening structure (20) and at least a second contact element (15) for contacting the trim element (40), so that when a force (90) is applied to the trim arrangement (1) by at least one component perpendicular to the side of the trim element (40) facing away from the operating element (30) and the operating element (30) is displaced, caused by the application of the force (90), the relative position of the trim element (40) to the operating element (30) remains at least substantially unchanged.

2. Trim arrangement (1) according to the preceding claim,
**characterized in that** the force transmission element (10) is arranged in the immediate vicinity of the position of the mechanical connection that can be formed between the operating element (30) and the fastening structure (20), so that a position of the contact of the force transmission element (10) on the fastening structure (20) can be formed, which position is spaced apart from a position of the mechanical connection between the operating element (30) and the fastening structure (20) by a distance that is less than half the maximum extension of the force transmission element (10) in a plane parallel to the plane formed by the trim element (40).

3. Trim arrangement (1) according to either of the preceding claims, **characterized in that** the operating element (30), for the purpose of forming the mechanical connection with the fastening structure (20), forms a projection (31) which at least partially passes through the trim element (40).

4. Trim arrangement (1) according to claim 3, **characterized in that** the force transmission element (10) is at least partially designed as a hollow profile and surrounds the projection (31) at least in portions, so that a force (90) acting on the trim arrangement (1) can be transmitted by the force transmission element (10) parallel to the longitudinal extension of the projection (31).

5. Trim arrangement (1) according to any of the preceding claims, **characterized in that** the force transmission element (10) is fixed to the trim element (40) in a form-fitting and/or force-fitting manner.

6. Trim arrangement (1) according to any of the preceding claims, **characterized in that** the force transmission element (10) has at least one stiffening element (11), in particular a stiffening rib, for the purpose of at least partially increasing the stiffness of the force transmission element (10).

7. Trim arrangement (1) according to any of the preceding claims, **characterized in that** the force transmission element (10) has at least one reduced-strength region, in particular a predetermined breaking point, for at least partial mechanical deformation and/or breakage of the force transmission element (10) when a defined minimum force is applied to the trim arrangement (1) in a defined direction which substantially deviates from a direction of force application extending perpendicular to the trim element (40), for the purpose of preventing or reducing a transmission of the force (90) applied to the trim arrangement (1) to the trim element (40).

8. Trim arrangement (1) according to any of the preceding claims, **characterized in that** the force transmission element (10) has at least one form-fitting element (12, 13) for the purpose of determining a unique position of the force transmission element (10) in relation to the operating element (30).

9. Motor vehicle door comprising a door shell, a fastening structure (20) arranged thereon or formed therefrom, and a trim arrangement (1) according to any of the preceding claims, wherein the operating element (30) is mechanically connected to the fastening structure (20).

10. Motor vehicle, in particular a passenger car, comprising at least one trim arrangement (1) according to any of claims 1 to 8 and/or at least one motor vehicle door according to claim 9.

## Revendications

1. Agencement de revêtement (1) destiné à l'équipement intérieur d'un véhicule automobile, en particulier à l'équipement intérieur d'une portière de véhicule automobile, comprenant un élément de commande (30) pouvant être relié mécaniquement à une structure de fixation (20), au moins un élément de revêtement (40) disposé au moins par sections sur un côté extérieur (33) de l'élément de commande (30), ainsi qu'au moins un élément de transmission de force (10), lequel est disposé sur un côté de l'élément de revêtement (40) opposé à l'élément de commande (30) et réalise au moins un premier élément d'appui (14) pour l'appui sur la structure de fixation (20) et au moins un second élément d'appui (15) pour l'appui sur l'élément de revêtement (40), en sorte que, lorsqu'une force (90) agit sur l'agencement de revêtement (1) avec au moins une composante perpendiculaire au côté de l'élément de revêtement (40) opposé à l'élément de commande (30) et lors d'un déplacement de l'élément de commande (30) provoqué par l'action de la force (90), la position relative de l'élément de revêtement (40) par rapport à l'élément de commande (30) reste au moins sensiblement inchangée.

2. Agencement de revêtement (1) selon la revendication précédente, **caractérisé en ce que** l'élément de transmission de force (10) est disposé à proximité immédiate de la position de la liaison mécanique pouvant être réalisée entre l'élément de commande (30) et la structure de fixation (20), en sorte qu'une position de l'appui de l'élément de transmission de force (10) sur la structure de fixation (20) peut être réalisée, qui présente, par rapport à une position de la liaison mécanique entre l'élément de commande (30) et la structure de fixation (20), une distance qui est inférieure à la moitié de l'extension maximale de l'élément de transmission de force (10) dans un plan parallèle à celui réalisé par l'élément de revêtement (40).

3. Agencement de revêtement (1) selon l'une des revendications précédentes, **caractérisé en ce que** l'élément de commande (30) réalise une saillie (31) traversant au moins partiellement l'élément de revêtement (40) afin de réaliser la liaison mécanique avec la structure de fixation (20).

4. Agencement de revêtement (1) selon la revendication 3,
**caractérisé en ce que** l'élément de transmission de force (10) est réalisé au moins partiellement sous forme de profilé creux et entoure la saillie (31) au moins par sections, en sorte qu'une force (90) agissant sur l'agencement de revêtement (1) peut être transmise par l'élément de transmission de force (10) parallèlement à l'extension longitudinale de la saillie (31).

5. Agencement de revêtement (1) selon l'une des revendications précédentes, **caractérisé en ce que** l'élément de transmission de force (10) est fixé à l'élément de revêtement (40) par complémentarité de formes et/ou de force.

6. Agencement de revêtement (1) selon l'une des revendications précédentes, **caractérisé en ce que** l'élément de transmission de force (10) présente au moins un élément de rigidification (11), en particulier une nervure de rigidification, dans le but d'augmenter au moins localement la rigidité de l'élément de transmission de force (10).

7. Agencement de revêtement (1) selon l'une des revendications précédentes, **caractérisé en ce que** l'élément de transmission de force (10) présente au moins une zone à résistance réduite, en particulier un point destiné à la rupture, pour la déformation mécanique au moins partielle et/ou la rupture de l'élément de transmission de force (10) lors de l'application d'une force minimale définie sur l'agencement de revêtement (1) dans une direction définie, qui s'écarte sensiblement d'une direction d'application de force s'étendant perpendiculairement à l'élément de revêtement (40), afin d'empêcher ou de réduire une transmission de la force (90) agissant sur l'agencement de revêtement (1) à l'élément de revêtement (40).

8. Agencement de revêtement (1) selon l'une des revendications précédentes, **caractérisé en ce que** l'élément de transmission de force (10) présente au moins un élément de verrouillage de forme (12, 13) afin de définir une position unique de l'élément de transmission de force (10) par rapport à l'élément de commande (30).

9. Portière de véhicule automobile comprenant une structure brute de porte ainsi que, disposée sur celle-ci ou réalisée à partir de celle-ci, une structure de fixation (20) ainsi qu'un ensemble de revêtement (1) selon l'une des revendications précédentes, dans laquelle l'élément de commande (30) est relié mécaniquement à la structure de fixation (20).

10. Véhicule automobile, en particulier voiture particulière, comprenant au moins un agencement de revêtement (1) selon l'une des revendications 1 à 8 et/ou au moins une portière de véhicule automobile selon la revendication 9.
